# EUROPEAN PATENT APPLICATION

(11) **EP 4 625 666 A1**
(43) Date of publication of application: **01.10.2025**
(21) Application number: 24903875.3
(22) Date of filing: 01.08.2024
(51) Int. Cl.: H01M 50/383, H01M 50/24, H01M 50/342

(54) **DEVICE INCLUDING BATTERY PACK**

(30) Priority: 14.12.2023 KR 20230181725
(71) Applicant: LG Energy Solution, Ltd., Seoul 07335 (KR)
(72) Inventor: KIM, Seung Joon, Daejeon 34122 (KR); RO, Yong Hwan, Daejeon 34122 (KR); PARK, Jin Yong, Daejeon 34122 (KR); CHI, Ho June, Daejeon 34122 (KR)
(74) Representative: Hoffmann Eitle
(86) International application number: PCT/KR2024/011343
(87) International publication number: WO 2025/127304

(57) **Abstract**

A device of the present disclosure includes: a battery pack including a lower frame in which a battery module is accommodated and an upper cover for covering the lower frame; a device housing positioned on the battery pack; and a smoke control boundary wall disposed between the battery pack and the device housing.

## Description

### [TECHNICAL FIELD]

### Cross-Reference to Related Applications

This application claims priority to and the benefit of Korean Patent Application No. 10-2023-0181725, filed on December 14, 2023, with the Korean Intellectual Property Office, the disclosure of which is incorporated herein by reference in their entirety.

The present disclosure relates to a device including a battery pack, and more particularly, to a device including a battery pack that can suppress thermal runaway.

### [BACKGROUND]

As a measure to solve the atmospheric pollution and the like caused from existing gasoline vehicles that uses fossil fuels, development of a secondary battery capable of being charged and discharged continues. A secondary battery has attracted considerable attention as an energy source for power-driven devices, such as an electric bicycle, an electric vehicle, a hybrid electric vehicle, and a plug-in hybrid electric vehicle as well as an energy source for mobile devices, such as a mobile phone, a digital camera, a laptop computer and a wearable device

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based batteries.

Typically, such a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In case of secondary batteries used for small-size devices, two or three battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. Further, one or more battery modules may configure a battery pack by being mounted together with various control and protection systems such as a battery disconnect unit (BDU), a battery management system (BMS), and a cooling system.

Generally, when a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, and the lifetime is shortened, and when thermal runaway occurs, the possibility of explosion or ignition increases.

FIG. 1 illustrates a conventional device including a battery pack.

FIG. 2 schematically illustrates a state in which an external ignition occurs when a battery pack ignites in a conventional device.

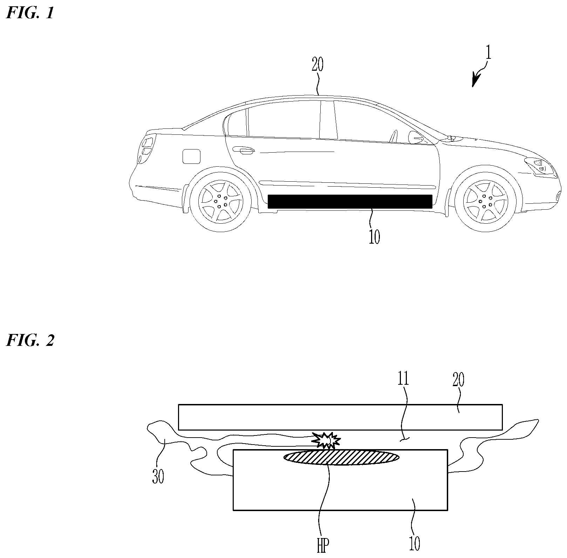

Referring to FIGS. 1 and 2 together, a conventional device 1 may be, for example, an electric vehicle including a battery pack 10. Inside the device 1, a predetermined gap 11 may exist between a device housing 20 and a battery pack 10. When an internal ignition occurs in the battery pack 10, the battery pack 10 discharges a venting gas 30 containing flammable substances to the outside. When the venting gas 30 discharged at this time enters the gap 11 due to the influence of wind or the like, there may be a problem that it meets the high-temperature surface(HP) of the battery pack 10 to cause an external ignition.

### [DETAILED DESCRIPTION OF THE INVENTION]

### [Technical Problem]

In order to solve the above-mentioned problems, it is an object of the present disclosure to block venting gas discharged to the outside of a battery pack at the time of ignition in the battery pack from flowing back into the battery pack, thereby preventing ignition in the outside of the battery pack.

### [Technical Solution]

According to the present disclosure, there is provided a device comprising: a battery pack including a lower frame in which a battery module is accommodated and an upper cover for covering the lower frame; a device housing positioned on the battery pack; and a smoke control boundary wall disposed between the battery pack and the device housing.

In an embodiment, the battery pack may comprise a venting hole for discharging venting gas to the outside, and the smoke control boundary wall may be positioned adjacent to the venting hole to block the venting gas from flowing into the upper cover.

In an embodiment, the venting hole may be formed on the side surface of the lower frame.

In an embodiment, the smoke control boundary wall may close a half or more of the gap between the battery pack and the device housing.

In an embodiment, the smoke control boundary wall may have a fixed shape regardless of the temperature.

In an embodiment, on the plane, the smoke control boundary wall may be disposed along at least a portion of the perimeter of the upper cover.

In an embodiment, the smoke control boundary wall may come in contact with the upper cover.

In an embodiment, the smoke control boundary wall may change in its shape or volume according to the temperature.

In an embodiment, the smoke control boundary wall may be a fire-resistant expansion tube, and may expand in its volume according to the temperature increase of the upper cover to close a gap between the battery pack and the device housing.

In an embodiment, the smoke control boundary wall may comprise a shape memory alloy, and may change its shape according to the temperature of the upper cover to close a gap between the battery pack and the device housing.

In an embodiment, the smoke control boundary wall may come in contact with the device housing.

In an embodiment, the smoke control boundary wall may come in contact with the upper cover and the device housing.

### [Advantageous Effects]

The device of the present disclosure includes a smoke control boundary wall disposed between a device housing and a battery pack, and thus can prevent the venting gas discharged to the outside from meeting the high-temperature battery pack and causing an external ignition.

### [BRIEF DESCRIPTION OF THE DRAWINGS]

FIG. 1 illustrates a conventional device including a battery pack.
FIG. 2 schematically illustrates a state in which an external ignition occurs when a battery pack ignites in a conventional device.

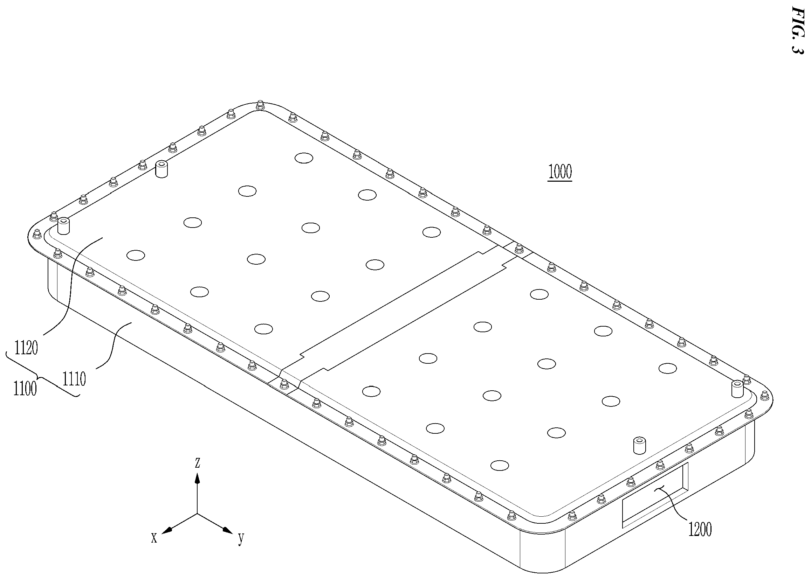

FIG. 3 illustrates a battery pack of an embodiment.

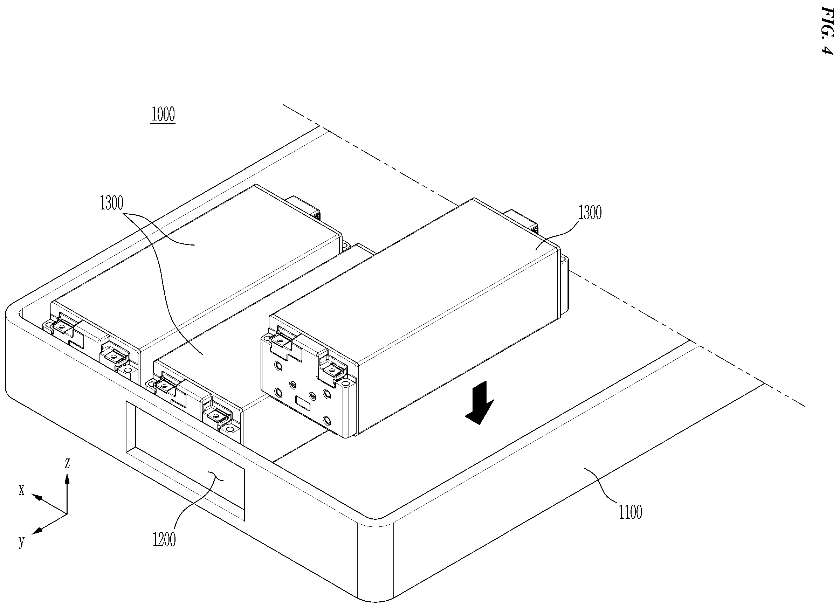

FIG. 4 illustrates a portion of the interior of a battery pack of an embodiment.

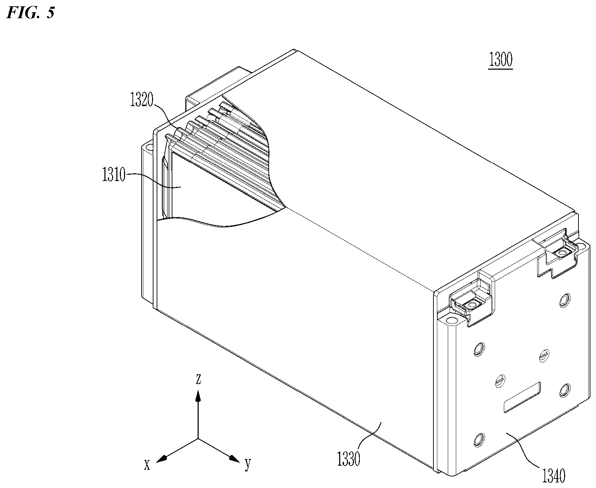

FIG. 5 illustrates a battery module of an embodiment.

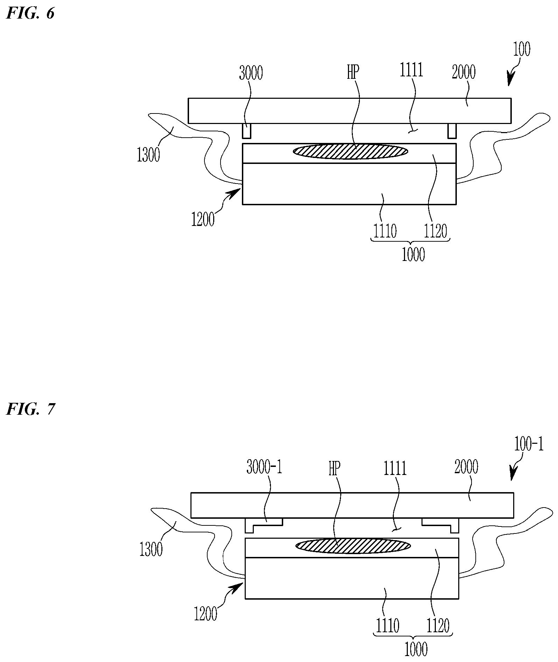

FIG. 6 illustrates a device including a smoke control boundary wall of an embodiment.
FIG. 7 illustrates a device including a smoke control boundary wall of an embodiment.

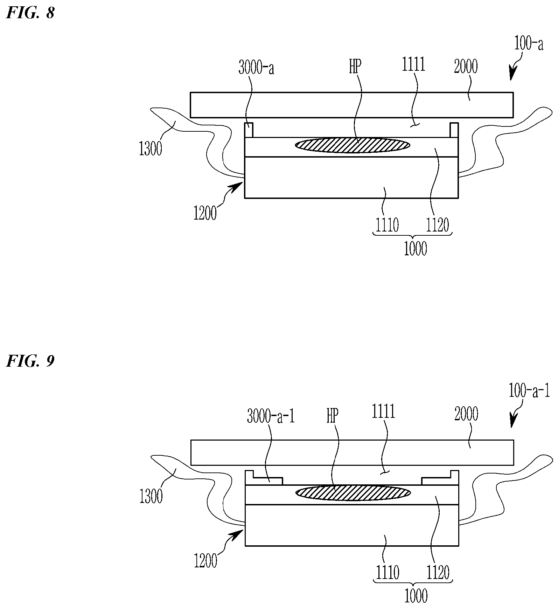

FIG. 8 illustrates a device including a smoke control boundary wall of an embodiment.
FIG. 9 illustrates a device including a smoke control boundary wall of an embodiment.

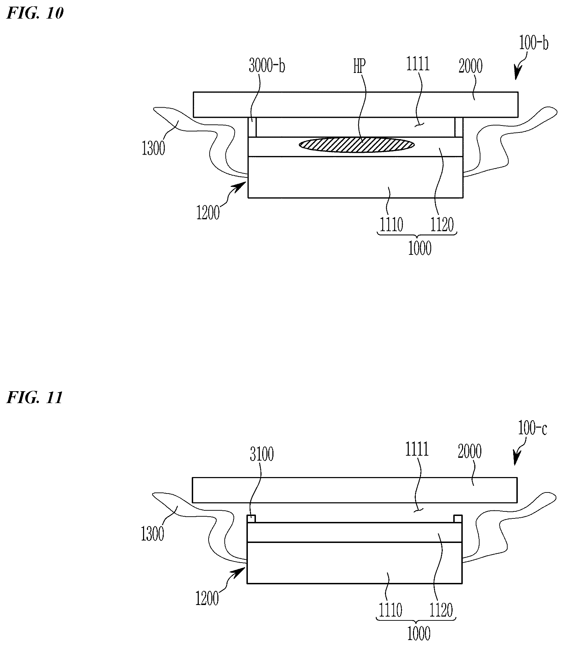

FIG. 10 illustrates a device including a smoke control boundary wall of an embodiment.
FIG. 11 illustrates a device including a smoke control boundary wall of an embodiment.

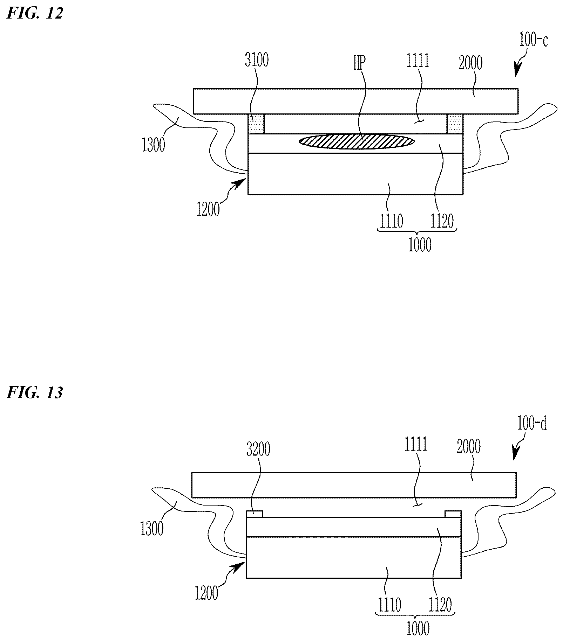

FIG. 12 illustrates a device including a smoke control boundary wall of FIG. 11.
FIG. 13 illustrates a device including a smoke control boundary wall of an embodiment.

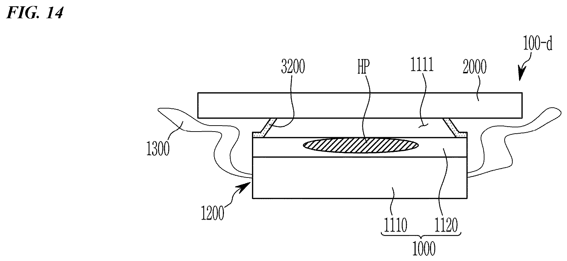

FIG. 14 illustrates a device including a smoke control boundary wall of FIG. 13.

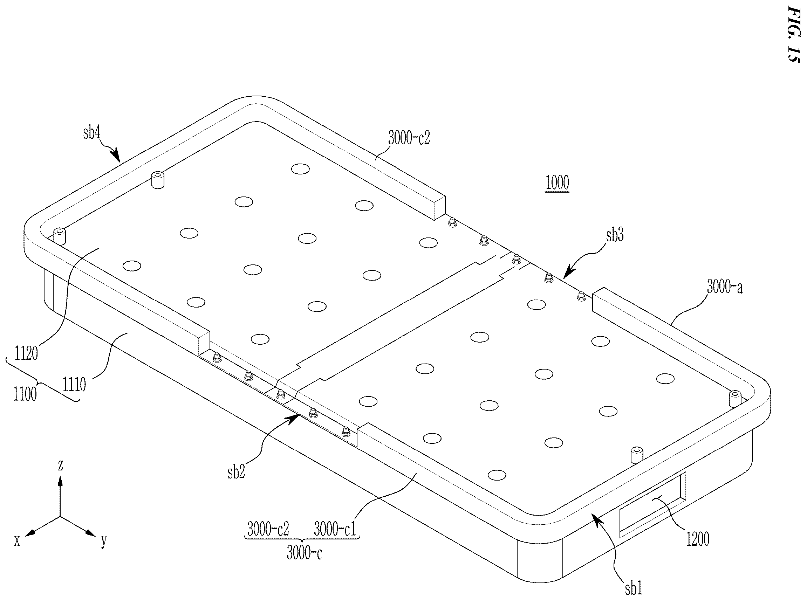

FIG. 15 illustrates a device including a smoke control boundary wall of an embodiment.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

As used herein, the terms "a first," "a second," etc. are used herein to explain various constitutional elements, and but the elements are not limited by these terms. These terms are only used to distinguish one constitutional element from the other constitutional elements.

Now, the device of the present disclosure will be described with reference to FIGS. 3 to 15 together.

The device of the present disclosure comprises:
a battery pack including a lower frame in which a battery module is accommodated and an upper cover for covering the lower frame;
a device housing positioned on the battery pack; and
a smoke control boundary wall disposed between the battery pack and the device housing.

FIG. 3 illustrates a battery pack of an embodiment.

FIG. 4 illustrates a portion of the interior of a battery pack of an embodiment.

Referring to FIGS. 3 and 4 together, a battery pack 1000 according to an embodiment of the present disclosure may include at least one battery module 1300, and a pack frame 1100 that accommodates the battery module 1300. The pack frame 1100 may include a lower frame 1110 and an upper cover 1120 for covering the lower frame 1110, and a plurality of battery modules 1300 may be positioned on the bottom part of the lower frame 1110. That is, a plurality of battery modules 1300 are disposed within the lower frame 1110, and the lower frame 1110 and the plurality of battery modules 1300 may be covered by the upper cover 1120.

Meanwhile, the battery pack 1000 according to the present embodiment may further include a venting hole 1200 formed in the pack frame 1100. Specifically, the venting hole 1200 may be formed on the side surface of the lower frame 1110. As the venting hole 1200 is formed, the venting gas generated inside the battery pack 1000 may be effectively discharged to the outside of the battery pack 1000.

The venting hole 1200 may be formed of one or more holes, and for example, may be formed of one hole. However, the number of venting holes 1200 is not limited thereto, and two or more holes may be formed if necessary. Below, in one example, it will be described that one venting hole 1200 is formed on the side surface of the lower frame 1110.

FIG. 5 illustrates a battery module of an embodiment.

Referring to FIG. 5, the battery module 1300 may include a battery cell stack 1320 formed by stacking a plurality of battery cells 1310 along a preset direction, and a module frame 1330 that accommodates the battery cell stack 1320. The module frame 1330 may have a structure that covers four surfaces corresponding to the upper and lower sides and the left and right sides of the battery cell stack 1320, and the front and rear sides of the battery cell stack 1320 may have an open structure. The front and rear sides of the battery cell stack 1320 opened by the module frame 1330 may be covered by an end plate 1340. Here, the plurality of battery cells 1310 may be pouch-type secondary batteries, but the embodiment is not limited thereto. For example, the battery cell 1310 may be a jelly-roll type, a stack type, a stack-folding type (including a stack-Z-folding type), or a lamination-stack type, in addition to a pouch type.

FIG. 6 illustrates a device including a smoke control boundary wall of an embodiment.

Referring to FIG. 6, the device 100 of an embodiment includes the above-mentioned battery pack 1000, a device housing 2000 disposed on the battery pack 1000, and a smoke control boundary wall 3000 disposed between the battery pack 1000 and the device housing 2000.

The device housing 2000 is schematically illustrated, and the shape may be modified in various ways depending on the type of the device 100. For example, if the device 100 is an electric vehicle, the device housing 2000 may be a vehicle chassis. A gap 1111 of 10 mm to 30 mm may exist between the device housing 2000 and the upper cover 1120 of the battery pack 1000.

When an internal ignition or the like occurs, the battery pack 1000 discharges venting gas 1300 toward the outside from the venting hole 1200 formed in the lower frame 1110. Generally, in a situation where the battery pack 1000 ignites, the device 100 may be in a parked state, i.e., stopped state. The venting gas 1300 discharged due to factors such as wind may flow back into the gap 1111 and meets the high temperature surface(HP) of the upper cover 1120 of the battery pack 1000, which may cause a risk of ignition.

The smoke control boundary wall 3000 is disposed between the battery pack 1000 and the device housing 2000. The present disclosure includes a smoke control boundary wall 3000 disposed between the battery pack 1000 and the device housing 2000, thereby preventing the venting gas 1300from flowing back into the gap 1111 between the battery pack 1000 and the device housing 2000. Thereby, the venting gas 1300 discharged to the outside can be prevented from causing an external ignition in the battery pack 1000.

In order to effectively block the venting gas 1300 from flowing into the upper cover 1120 of the battery pack 1000, the smoke control boundary wall 3000 may be positioned adjacent to the venting hole 1200. In addition, the smoke control boundary wall 3000 may be positioned adjacent to the edge of the battery pack 1000 so as to prevent the venting gas 1300 from flowing into the inside of the battery pack 1000.

In an embodiment, the smoke control boundary wall 3000 may include a material having heat resistance and capable of absorbing heat when the battery pack 1000 ignites. For example, the smoke control boundary wall 3000 may be made of aluminum or steel material. In addition, the height of the smoke control boundary wall 3000 may be a half or more of the gap 1111, which is a linear distance between the battery pack 1000 and the device housing 2000.

In an embodiment, the smoke control boundary wall 3000 may have a fixed position and a fixed shape regardless of the temperature of the upper cover 1120.

The smoke control boundary wall 3000 may come in contact with the device housing 2000, and may be formed specifically on the lower surface of the device housing 2000. For example, the smoke control boundary wall 3000 may have a shape that protrudes from the lower surface of the device housing 2000 toward the battery pack 1000.

Furthermore, the smoke control boundary wall 3000 may have a bar shape.

However, the shape of the smoke control boundary wall 3000 is not limited thereto.

In the following, the differences from the device 100 of FIG. 6 will be mainly described, and the above-mentioned contents are similarly applied to other parts, and a detailed description thereof will be omitted.

FIG. 7 illustrates a device including a smoke control boundary wall of an embodiment.

In the device 100-1 of an embodiment, the smoke control boundary wall 3000-1 may come in contact with the device housing 2000, and may be formed on the lower surface of the device housing 2000.

The smoke control boundary wall 3000-1 may include a portion that extends to the inside compared to the smoke control boundary wall 3000 of FIG. 6. Thereby, the fixing force between the smoke control boundary wall 3000-1 and the device housing 2000 may be further secured.

FIG. 8 illustrates a device including a smoke control boundary wall of an embodiment.

The device 100-a of an embodiment may include a smoke control boundary wall 3000-a that comes in contact with the upper cover 1120 of the battery pack 1000. Specifically, the smoke control boundary wall 3000-a may be formed on the upper surface of the upper cover 1120.

For example, the smoke control boundary wall 3000-a may have a shape that protrudes from the upper surface of the upper cover 1120 toward the device housing 2000.

FIG. 9 illustrates a device including a smoke control boundary wall of an embodiment.

In the device 100-a-1 of an embodiment, the smoke control boundary wall 3000-a-1 may come in contact with the battery pack 1000, and be formed on the upper surface of the upper cover 1120 of the battery pack 1000. The smoke control boundary wall 3000-a-1 may include a portion that extends inwardly compared to the smoke control boundary wall 3000-a of FIG. 8. Thereby, the fixing force between the smoke control boundary wall 3000-a-1 and the battery pack 2000 may be further secured. FIG. 10 illustrates a device including a smoke control boundary wall of an embodiment.

As illustrated in FIG. 10, the device 100-b of an embodiment may include a smoke control boundary wall 3000-b that comes in contact with both the upper cover 1120 of the battery pack 1000 and the device housing 2000. That is, the smoke control boundary wall 3000-b may completely close the gap 1111 between the battery pack 1000 and the device housing 2000.

In another embodiment of the device of the present disclosure, the smoke control boundary wall may be one that operates according to the temperature. For example, the smoke control boundary wall may change in its shape or volume according to the temperature.

FIG. 11 illustrates a device including a smoke control boundary wall of an embodiment.

FIG. 12 illustrates a device including a smoke control boundary wall of FIG. 11.

Referring to FIGS. 11 and 12, the device 100-c of an embodiment may include a smoke control boundary wall 3100 that expands in its volume according to the temperature.

For example, the smoke control boundary wall 3100 may be an expansion tube whose volume expands at a specific temperature or higher. Specifically, the smoke control boundary wall 3100 expands in its volume by generating gas therein at a specific temperature or higher, and may include a material such as rubber or aluminum foil. Alternatively, the smoke control boundary wall 3100 may include materials such as foamed silicone, the material itself having foaming properties. The smoke control boundary wall 3100 expands at a temperature of about 100°C or higher and can withstand a temperature of about 400°C to 500°C or higher.

The smoke control boundary wall 3100 of an embodiment may be disposed on the upper cover 1120 of the battery pack 1000, and may come in contact with the upper surface of the upper cover 1120. When the temperature of the surface(HP) of the upper cover 1120 is less than about 120°C, the smoke control boundary wall 3100 may hardly close the gap 1111 as illustrated in FIG. 11. However, when the temperature of the surface (HP) of the upper cover 1120 is 120°C or higher due to internal ignition of the battery pack 1000, the smoke control boundary wall 3100 may expand and have a shape that completely close the gap 1111.

As a result, the venting gas 1300 discharged to the outside from the venting hole 1200 does not flow into the gap 1111 between the battery pack 1000 and the device housing 2000, and external ignition of the battery pack 1000 can be prevented.

FIG. 13 illustrates a device including a smoke control boundary wall of an embodiment.

FIG. 14 illustrates a device including a smoke control boundary wall of FIG. 13.

Referring to FIGS. 13 and 14, the device 100-d of an embodiment may include a smoke control boundary wall 3200 whose shape changes according to the temperature. For example, the smoke control boundary wall 3200 may be a shape memory alloy.

The smoke control boundary wall 3200 of an embodiment may be disposed on the upper cover 1120 of the battery pack 1000, and may come in contact with the upper surface of the upper cover 1120. When the temperature of the surface(HP) of the upper cover 1120 is less than 120°C, the smoke control boundary wall 3200 may hardly close the gap 1111 as illustrated in FIG. 13. However, due to internal ignition of the battery pack 1000, when the temperature of the surface(HP) of the upper cover 1120 is 120°C or higher, the smoke control boundary wall 3200 may expand and have a shape that completely close the gap 1111.

As a result, the venting gas 1300 discharged to the outside from the venting hole 1200 does not flow into the gap 1111 between the battery pack 1000 and the device housing 2000, and the external ignition of the battery pack 1000 can be prevented.

Meanwhile, the smoke control boundary wall 3000-c can be disposed along at least a portion of the perimeter of the upper cover 1120 on a plane.

FIG. 15 illustrates a device including a smoke control boundary wall of an embodiment. Referring to FIG. 15, the smoke control boundary wall 3000-c may be disposed along at least a portion of the perimeter of the upper cover 1120 of the battery pack 1000.

Referring to FIG. 15, the smoke control boundary wall 3000-c may include a first smoke control boundary wall 3000-c1 disposed along a first side sb1 adjacent to the venting hole 1200, and a second side sb2 and a third side sb3 adjacent to the first side sb1.

Furthermore, the smoke control boundary wall 3000-c may include a second smoke control boundary wall 3000-c2 facing the first smoke control boundary wall 3000-c1, thereby improving the smoke control effect.

However, the embodiment is not limited thereto, and the smoke control boundary wall 3000-c may include only the first smoke control boundary wall 3000-c1 that is relatively closer to the venting hole 1200, and the second smoke control boundary wall 3000-c2 may be omitted.

Furthermore, the first smoke control boundary wall 3000-c1 may be disposed only on the first side sb1 relatively more adjacent to the venting hole 1200, and may not be disposed on the second side sb2 and the third side sb3.

That is, the smoke control boundary wall 3000-c is necessarily disposed on the first side sb1 adjacent to the venting hole 1200, and may be further disposed along the perimeter of the upper cover 1120 if necessary.

This can be similarly applied to the smoke control boundary walls 3000-a, 3000-a-1, 3000-b, 3100 and 3200 described above in FIGS. 8 to 14. As illustrated in FIGS. 6 and 7, in the case of the smoke control boundary walls 3000 and 3000-1 protruding from the device housing 2000, it can be applied so as to be disposed adjacent to at least a portion of the perimeter of the upper cover 1120 on a plane.

While the preferable embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: device
1000: battery pack
1100: pack frame
1110: lower frame
1120: upper cover
1200: venting hole
1300: battery module
2000: device housing
3000: smoke control boundary wall

## Claims

1. A device comprising:
a battery pack including a lower frame in which a battery module is accommodated and an upper cover for covering the lower frame;
a device housing positioned on the battery pack; and
a smoke control boundary wall disposed between the battery pack and the device housing.

2. The device according to claim 1, wherein:
the battery pack comprises a venting hole for discharging venting gas to the outside, and
the smoke control boundary wall is positioned adjacent to the venting hole to block the venting gas from flowing into the upper cover.

3. The device according to claim 2, wherein:
the venting hole is formed on a side surface of the lower frame.

4. The device according to claim 2, wherein:
the smoke control boundary wall closes a half or more of the gap between the battery pack and the device housing.

5. The device according to claim 1, wherein:
the smoke control boundary wall has a fixed shape regardless of the temperature.

6. The device according to claim 1, wherein:
on a plane, the smoke control boundary wall is disposed along at least a portion of the perimeter of the upper cover.

7. The device according to claim 1, wherein:
the smoke control boundary wall comes in contact with the upper cover.

8. The device according to claim 1, wherein:
the smoke control boundary wall changes its shape or volume according to the temperature.

9. The device according to claim 8, wherein:
the smoke control boundary wall is a fire-resistant expansion tube, and expands in its volume according to the temperature increase of the upper cover to close a gap between the battery pack and the device housing.

10. The device according to claim 8, wherein:
the smoke control boundary wall comprises a shape memory alloy, and changes its shape according to the temperature of the upper cover to close a gap between the battery pack and the device housing.

11. The device according to claim 1, wherein:
the smoke control boundary wall comes in contact with the device housing.

12. The device according to claim 1, wherein:
the smoke control boundary wall comes in contact with the upper cover and the device housing.
